(19) Europäisches Patentamt
European Patent Office
Office européen des brevets

(11) **EP 1 734 393 A1**

(12) **EUROPEAN PATENT APPLICATION**

(43) Date of publication:
20.12.2006 Bulletin 2006/51

(51) Int Cl.:
*G02B 9/62* (2006.01)

(21) Application number: 06253101.7

(22) Date of filing: 15.06.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 15.06.2005 JP 2005175054

(71) Applicant: Ricoh Company, Ltd.
Tokyo 143-8555 (JP)

(72) Inventor: Saito, Takao
c/o Ricoh Company, Ltd.
Tokyo 143-8555 (JP)

(74) Representative: Leeming, John Gerard
J.A. Kemp & Co.,
14 South Square,
Gray's Inn
London WC1R 5JJ (GB)

(54) **Photographic optical system, photocographic lens unit, camera and mobile information terminal**

(57)    A photographic optical system is constructed by arranging, subsequently from an object side toward an image plane side, a first lens (E1) structured by a negative lens of a negative meniscus type which faces a powerful concave surface, formed aspherical, toward the image plane side, a second lens (E2) structured by a negative lens of a negative meniscus type which faces its weak convex surface toward the object side, a third lens (E3) as a positive lens of a both convex type, an aperture stop (FA), a cemented lens structured by attaching a fourth lens (E4) as a positive lens of a both convex type and a fifth lens (E5) as a negative lens of a both concave type together in close, and a sixth lens (E6) as a positive lens of a both convex type in which both surfaces thereof are formed aspherical. The first lens (E1) to the third lens (E3) structure a front group (GF), and the fourth lens (E4) to the sixth lens (E6) structure a rear group (GR). The rear group (GR) is moved together with the aperture stop (FA) to be extended so as to perform focusing.

# FIG. 1

**Description**

The present invention relates to an improvement of a photographic optical system of a single focus used in various types of cameras including a so-called silver salt camera as an optical system for photographing. More particularly, the invention relates to a photographic optical system suitable for cameras such as a digital camera, a video camera and so on, and to a photographic lens unit, a camera and a mobile information terminal using such a photographic optical system.

A camera of a type which images an image of an object to be photographed with a solid-state image pick-up device such as a CCD (Charge-Coupled Device) image pick-up device or the like, acquires image data of a static image (still image) or a motion image (movie image) of the photographic object, and digitally stores the acquired image data into a nonvolatile semiconductor memory or the like represented by a flash memory, typically referred to as a digital camera or an electronic camera etc., has been generalized in recent years. A market for such a digital camera has been a very large one, and the user's demands for the digital camera have been high and ranged in scope. In particular, simplification of a structure which leads to improvement in performance and miniaturization, as well as advancement in price reduction or credibility, always form the backbone of the user's demand.

In an optical system which uses the image pick-up device such as the CCD or the like as a light-sensitive element, like a photographic optical system in the digital camera etc., it is necessary to ensure a long back-focus since it is required to make a ray of light to enter therethrough substantially perpendicular to the image pick-up device and it is also required to dispose filters such as an optical low-pass filter and an infrared-cut filter between the optical system and the image pick-up device. In the optical system in which the back-focus is made long, however, compensation for various aberrations becomes difficult when a field angle is widened to attain a wide field angle and a diameter is made large. In addition, deterioration in planarity of an image plane (change in field curvature) due to performing of focusing to the photographic object in a short distance becomes large when the field angle is widened. Hence, it becomes difficult to maintain sufficient imaging performance for the photographic object present from infinity to the short distance.

More specifically, for the photographic optical system, there are a variable focal distance optical system which is possible to variably select a focal distance such as a zoom lens or a so-called varifocal lens, and a single focus optical system in which the focal distance is fixed, i.e. the field angle is fixed. Generally, the focusing in the single focus optical system, in which the focal distance is fixed, is performed by extending or collapsing of the entire optical system to advance or retract the entire optical system relative to the image plane. However, by the increase in performance and accuracy in process and assembly of the optical system of recent years, there have been many cases in which an optical system of a plural lens structure structured by utilizing a plurality of lenses is used, like the variable focal distance optical system, even in the single focus optical system. In such an optical system of the plural lens structure, it has been difficult to perform the focusing by the advancing or the retracting of the entire optical system, from the aspect of maintaining the performance.

Accordingly, nowadays, the focusing which is performed by moving a part of the optical system, as in the zoom lens or the like, has been implemented even in the single focus optical system. For example, JP2004-177435A discloses an optical system which disposes, subsequently from an object side toward an image side, a first lens constituted by a negative meniscus lens facing its powerful concave surface toward the image side, a second lens constituted by a negative lens, a third lens constituted by a positive lens, a fourth lens constituted by a positive lens, a fifth lens constituted by a negative lens, and a sixth lens constituted by a positive lens in which at least one of surfaces thereof is structured aspherical. The optical system of JP2004-177435A further discloses that a first lens group having a negative refractive power is structured by the first and the second lenses, a second lens group having a positive refractive power is structured by the third, the fourth and the fifth lenses, and a third lens group having a positive refractive power is structured by the sixth lens, and wherein the fourth lens and the fifth lens are attached together in close to constitute a cemented lens. In addition, JP2004-177435A discloses that the first lens group or the third lens group is moved to perform the focusing to the photographic object in the short distance.

The optical system disclosed in JP2004-177435A is small-sized, and can obtain a wide field angle of about 35 degrees in a half-field angle. However, the change in the field curvature at the time of the focusing, i.e. degradation of the performance due to the deterioration in the planarity of the image plane, has not been sufficiently taken into consideration in the optical system of JP2004-177435A. In particular, the problem of the change in the field curvature, i.e. the degradation of the planarity of the image plane, in the focusing becomes more crucial when an attempt to obtain a further wider field angle such as about 39 degrees to 40 degrees in the half-field angle is made.

Correspondingly, JP2004-29641A discloses a focusing technology called floating type focusing or the like in which focusing to the photographic object present from the infinity to the short distance is performed while the degradation of the performance is compensated by moving a plurality of lens groups at movement amounts different from each other, so as to prevent the degradation of the performance in the focusing. This type of focusing, however, has disadvantages in that a mechanism for the focusing operation is significantly complicated and at the same time, control for such a mechanism is complicated as well, and consequently, increase in the number of components and a size of a device, and further increase in costs are incurred.

The present invention has been made in view of the above-mentioned circumstances, and therefore, at least one objective of the present invention is to provide a photographic optical system, a photographic lens unit, a camera and a mobile information terminal which are small-sized, capable of realizing a wide field angle and a large diameter, and possible to obtain high performance in spite of a distance of a photographic object.

To achieve these and other advantages and in accordance with the purpose of the invention, as embodied and broadly described herein, the invention provides a photographic optical system, comprising: a first lens; a second lens; a third lens; a fourth lens; a fifth lens; and a sixth lens, the first lens to the sixth lens being subsequently arranged in an order of the first lens to the sixth lens from an object side to a side of an image plane, characterized in that: the first lens is structured by a negative meniscus lens facing its convex surface toward the object side; the second lens is structured by a negative lens; the third lens is structured by a positive lens; the fourth lens is structured by a positive lens; the fifth lens is structured by a negative lens; and the sixth lens is structured by a positive lens, the first lens, the second lens and the third lens structure a front group, the fourth lens, the fifth lens and the sixth lens structure a rear group, the front group and the rear group are subsequently arranged in an order of the front group and the rear group from the object side to the side of the image plane, and the rear group is moved to perform focusing corresponding to a change in an object distance.

According to the photographic optical system of the present invention, in particular, it is possible to effectively compensate deterioration in planarity of the image plane at the time of the focusing when a field angle is widened, and to obtain high performance in spite of a distance of a photographic object.

Following are preferred embodiments (1) to (11) of the photographic optical system according to the present invention. Any combinations thereof may be considered to be preferred ones of the present invention unless any contradictions occur.

(1) A following conditional formula is satisfied:

$$1.5 < fR/f < 3$$

where a focal distance of the rear group is fR, and a focal distance of an entire system of the photographic optical system is f.

According to the embodiment (1) of the photographic optical system of the invention, in particular, it is possible to make a change in a finest surface of a peripheral image further small, to more effectively compensate the deterioration in the planarity of the image plane at the time of the focusing when the field angle is widened, and to obtain high performance in spite of the distance of the photographic object.

(2) A following conditional formula is satisfied:

$$1 < fR/f6 < 1.6$$

where a focal distance of the rear group is fR, and a focal distance of the sixth lens, which is structured by the positive lens and disposed nearest to the side of the image plane in the rear group, is f6.

According to the embodiment (2) of the photographic optical system of the invention, in particular, it is possible to substantially conform the finest surface of the peripheral image to a finest surface of a center image, to more effectively compensate the deterioration in the planarity of the image plane at the time of the focusing when the field angle is widened, and to obtain high performance in spite of the distance of the photographic object.

(3) A following conditional formula is satisfied:

$$0.2 < S/f < 1$$

where a surface facing toward the side of the image plane of one of the first lens and the second lens, each structured by the negative lens, in the front group is aspherical, and where a distance in a direction of an optical axis of the photographic optical system between a point where the aspherical surface and the optical axis intersect and a point where the aspherical surface and a principal ray of a light flux reaching a maximum image height intersect is S, and a focal distance of an entire system of the photographic optical system is f.

According to the embodiment (3) of the photographic optical system of the invention, in particular, it is possible to avoid degradation of distortion aberration in accordance with the widening of the field angle as well, to more effectively compensate the deterioration in the planarity of the image plane at the time of the focusing when the field angle is widened, and to obtain high performance in spite of the distance of the photographic object.

(4) The fourth lens, structured by the positive lens and disposed in the object side, and the fifth lens, structured by the negative lens, of the rear group are attached together in close to form a cemented lens.

According to the embodiment (4) of the photographic optical system of the invention, in particular, it is possible to effectively suppress a displacement of positions of the lenses occurs while assembling is carried out.

(5) An aperture stop is disposed between the front group and the rear group, wherein the first lens to the sixth lens are subsequently arranged, from the object side to the side of the image plane, in an order of: the first lens structured by the negative meniscus lens facing its convex surface toward the object side; the second lens structured by the negative lens; the third lens structured by the positive lens; the aperture stop; the fourth lens structured by the positive lens; the fifth lens structured by the negative lens; and the sixth lens structured by the positive lens, and wherein the fourth lens, the fifth lens and the sixth lens are disposed nearer to the side of the image plane than the aperture stop, and are integrally moved to perform the focusing corresponding to the change in the object distance.

According to the embodiment (5) of the photographic optical system of the invention, in particular, it is possible to effectively compensate the deterioration in the planarity of the image plane at the time of the focusing when the field angle is widened, and to obtain high performance in spite of the distance of the photographic object.

(6) A following conditional formula is satisfied:

$$1.5 < fR/f < 3$$

where a synthetic focal distance of the fourth lens, the fifth lens and the sixth lens, which are disposed nearer to the side of the image plane than the aperture stop, is fR, and a focal distance of an entire system of the photographic optical system is f.

According to the embodiment (6) of the photographic optical system of the invention, in particular, it is possible to further effectively compensate the deterioration in the planarity of the image plane at the time of the focusing when the field angle is widened, and to obtain high performance in spite of the distance of the photographic object.

(7) A following conditional formula is satisfied:

$$1 < fR/f6 < 1.6$$

where a synthetic focal distance of the fourth lens, the fifth lens and the sixth lens, which are disposed nearer to the side of the image plane than the aperture stop, is fR, and a focal distance of the sixth lens, which is disposed nearest to the side of the image plane among the fourth lens, the fifth lens and the sixth lens, is f6.

According to the embodiment (7) of the photographic optical system of the invention, in particular, it is possible to substantially conform the finest surface of the peripheral image to the finest surface of the center image, to more effectively compensate the deterioration in the planarity of the image plane at the time of the focusing when the field angle is widened, and to obtain high performance in spite of the distance of the photographic object.

(8) A following conditional formula is satisfied:

$$0.2 < S/f < 1$$

where a surface facing toward the side of the image plane of one of the first lens and the second lens among the first lens, the second lens and the third lens, which are disposed nearer to the object side than the aperture stop, is aspherical, and where a distance in a direction of an optical axis of the photographic optical system between a point where the aspherical surface and the optical axis intersect and a point where the aspherical surface and a principal ray of a light flux reaching a maximum image height intersect is S, and a focal distance of an entire system of the photographic optical system is f.

According to the embodiment (8) of the photographic optical system of the invention, in particular, it is possible to avoid the degradation of the distortion aberration in accordance with the widening of the field angle as well, to more effectively compensate the deterioration in the planarity of the image plane at the time of the focusing when the field angle is widened, and to obtain high performance in spite of the distance of the photographic object.

(9) The fourth lens disposed in the object side and the fifth lens among the fourth lens, the fifth lens and the sixth lens, which are disposed nearer to the side of the image plane than the aperture stop, are attached together in close to form a cemented lens.

According to the embodiment (9) of the photographic optical system of the invention, in particular, it is possible to effectively suppress the displacement of positions of the lenses occurs while the assembling is carried out.

(10) The aperture stop is, when the focusing corresponding to the change in the object distance is performed, integrally moved with the fourth lens, the fifth lens and the sixth lens which are disposed nearer to the side of the image plane than the aperture stop.

According to the embodiment (10) of the photographic optical system of the invention, in particular, it is possible to provide a suitable structure in a case in which an interval between the aperture stop and a lens surface adjacent to the aperture stop in the object side of the aperture stop is wide and an interval between the aperture stop and a lens surface adjacent to the aperture stop in the side of the image place of the aperture stop is narrow.

(11) The aperture stop is configured not to be moved and is fixed integrally with the first lens, the second lens and the third lens which are disposed nearer to the object side than the aperture stop, when the focusing corresponding to the change in the object distance is performed.

According to the embodiment (11) of the photographic optical system of the invention, in particular, it is possible to provide a suitable structure in a case in which the interval between the aperture stop and the lens surface adjacent to the aperture stop in the object side of the aperture stop is narrow and the interval between the aperture stop and the lens surface adjacent to the aperture stop in the side of the image place of the aperture stop is wide.

In addition, a photographic lens unit according to the present invention comprises any one of the photographic optical system according to the present invention and its embodiments described above as an optical system.

According to the photographic lens unit of the invention, in particular, it is possible to effectively compensate the deterioration in the planarity of the image plane at the time of the focusing when the field angle is widened, and to obtain high performance in spite of the distance of the photographic object.

Moreover, a camera according to the present invention comprises any one of the photographic optical system according to the present invention and its embodiments described above as an optical system for photographing.

According to the camera of the invention, in particular, it is possible to effectively compensate the deterioration in the planarity of the image plane at the time of the focusing when the field angle is widened, and to obtain high performance in spite of the distance of the photographic object.

Furthermore, a mobile information terminal according to the present invention comprises any one of the photographic optical system according to the present invention and its embodiments described above as an optical system for photographing of a camera function portion.

According to the mobile information terminal of the invention, in particular, it is possible to effectively compensate the deterioration in the planarity of the image plane at the time of the focusing when the field angle is widened, and to obtain high performance in spite of the distance of the photographic object.

Therefore, according to the present invention, it is possible to provide the photographic optical system, the photographic lens unit, the camera and the mobile information terminal which are small-sized, capable of realizing the wide field angle and the large diameter, and possible to obtain the high performance in spite of the photographic object distance.

It is to be understood that both the foregoing general description and the following detailed description are exemplary, and are intended to provide further explanation of the invention as claimed.

In the following, the present invention is explained in greater detail by means of several embodiments thereof in conjunction with the accompanying drawings. Note that the accompanying drawings are included to provide a further understanding of the invention, and are incorporated in and constitute a part of this description. The drawings illustrate embodiments of the invention and, together with the description, serve to explain the principles of the invention.

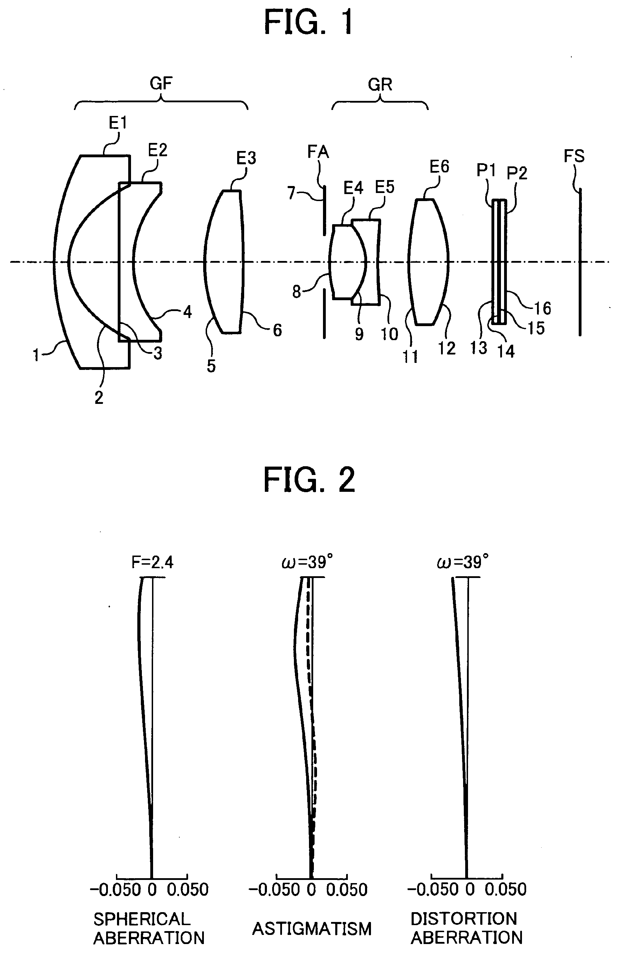

FIG. 1 is a sectional diagram taken along an optical axis, and which shows a structure of a photographic optical system according to a first exemplary embodiment of the present invention.

FIG. 2 is an aberration curve diagram showing respective aberration properties of spherical aberration, astigmatism and distortion aberration when an object distance of the photographic optical system according to the first embodiment of the present invention shown in FIG. 1 is infinity.

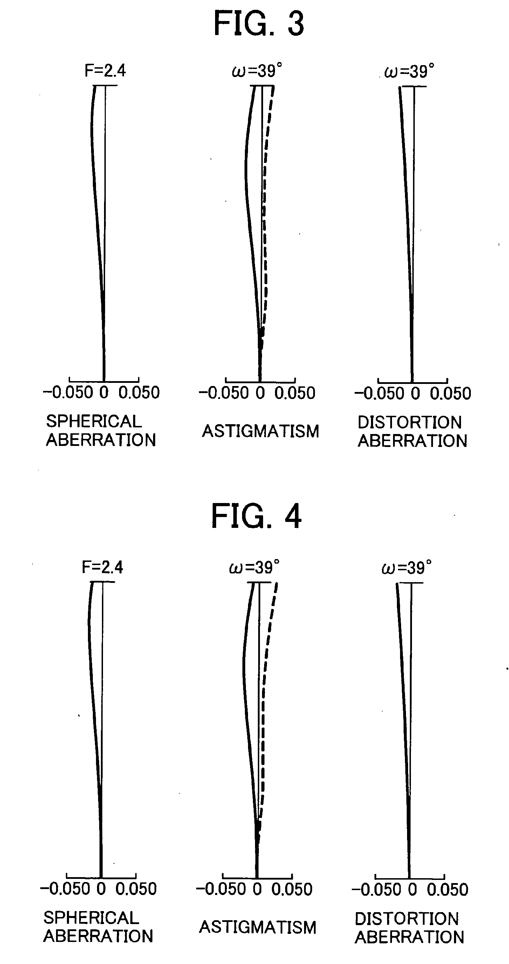

FIG. 3 is an aberration curve diagram showing the respective aberration properties of the spherical aberration, the astigmatism and the distortion aberration when the object distance of the photographic optical system according to the first embodiment of the present invention shown in FIG. 1 is one meter and focusing is performed by extending a rear group.

FIG. 4 is an aberration curve diagram showing the respective aberration properties of the spherical aberration, the astigmatism and the distortion aberration when the object distance is one meter and the focusing is performed by extending the entire groups, in order to compare those with the properties, by the extending of the rear group, of the photographic optical system according to the first embodiment of the present invention shown in FIG. 3.

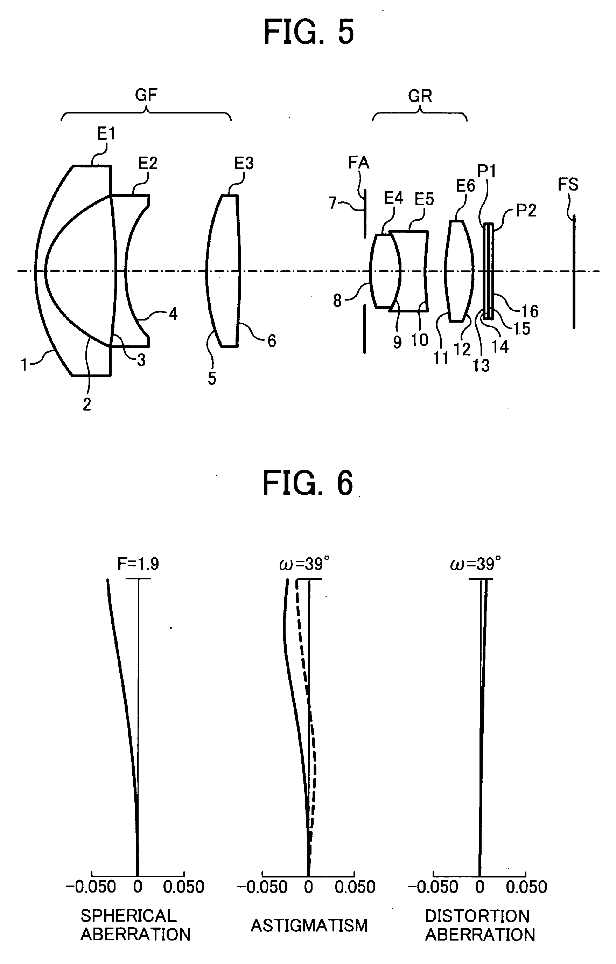

FIG. 5 is a sectional diagram taken along an optical axis, and which shows a structure of a photographic optical system according to a second exemplary embodiment of the present invention.

FIG. 6 is an aberration curve diagram showing the respective aberration properties of the spherical aberration, the astigmatism and the distortion aberration when the object distance of the photographic optical system according to the second embodiment of the present invention shown in FIG. 5 is the infinity.

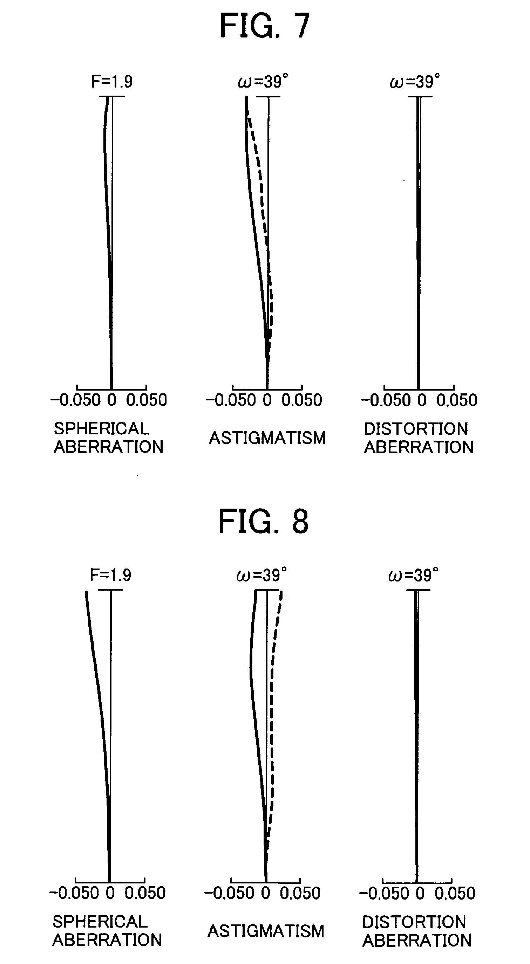

FIG. 7 is an aberration curve diagram showing the respective aberration properties of the spherical aberration, the astigmatism and the distortion aberration when the object distance of the photographic optical system according to the second embodiment of the present invention shown in FIG. 5 is one meter and the focusing is performed by extending a rear group.

FIG. 8 is an aberration curve diagram showing the respective aberration properties of the spherical aberration, the astigmatism and the distortion aberration when the object distance is one meter and the focusing is performed by extending the entire groups, in order to compare those with the properties, by the extending of the rear group, of the photographic optical system according to the second embodiment of the present invention shown in FIG. 7.

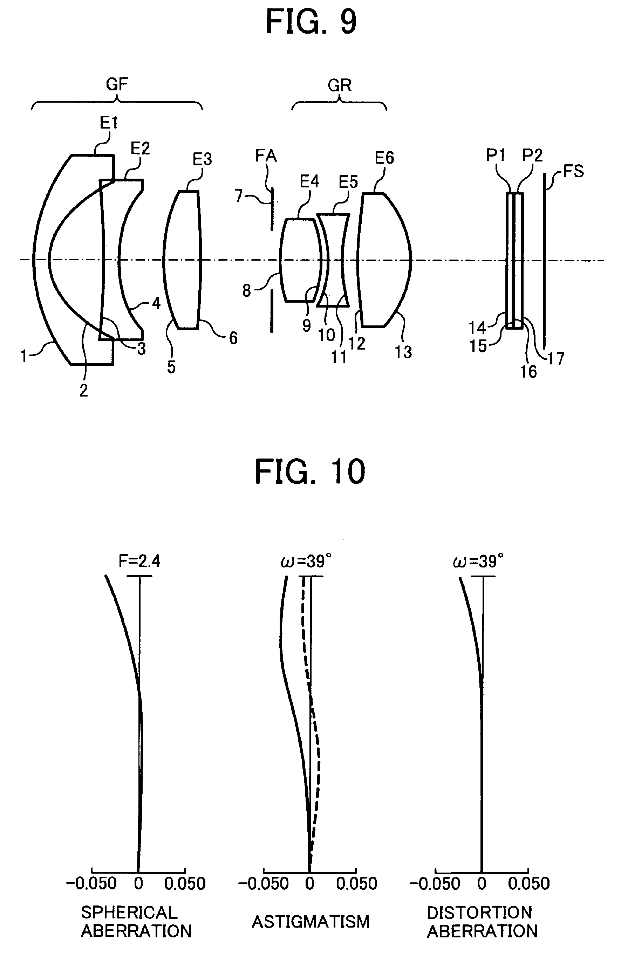

FIG. 9 is a sectional diagram taken along an optical axis, and which shows a structure of a photographic optical system according to a third exemplary embodiment of the present invention.

FIG. 10 is an aberration curve diagram showing the respective aberration properties of the spherical aberration, the astigmatism and the distortion aberration when the object distance of the photographic optical system according to the third embodiment of the present invention shown in FIG. 9 is the infinity.

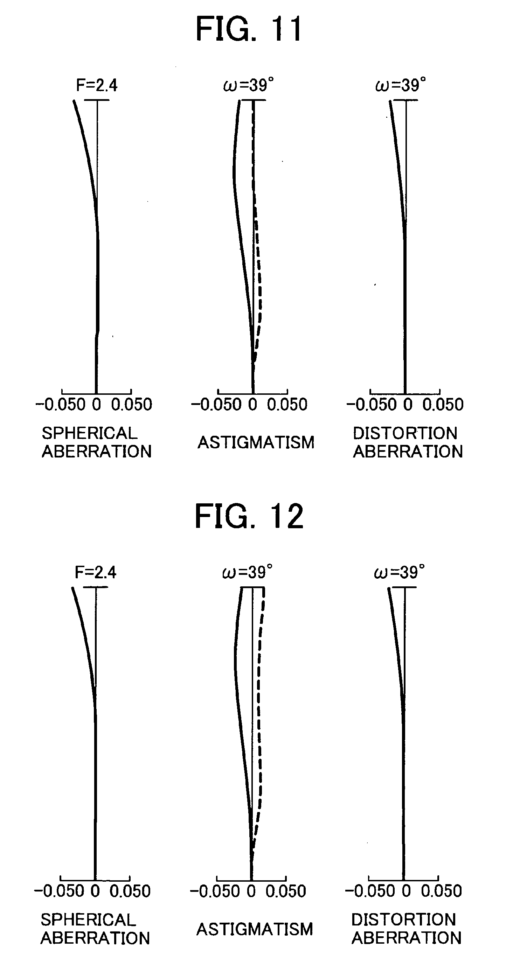

FIG. 11 is an aberration curve diagram showing the respective aberration properties of the spherical aberration, the astigmatism and the distortion aberration when the object distance of the photographic optical system according to the third embodiment of the present invention shown in FIG. 9 is one meter and the focusing is performed by extending a rear group.

FIG. 12 is an aberration curve diagram showing the respective aberration properties of the spherical aberration, the astigmatism and the distortion aberration when the object distance is one meter and the focusing is performed by extending the entire groups, in order to compare those with the properties, by the extending of the rear group, of the photographic optical system according to the third embodiment of the present invention shown in FIG. 11.

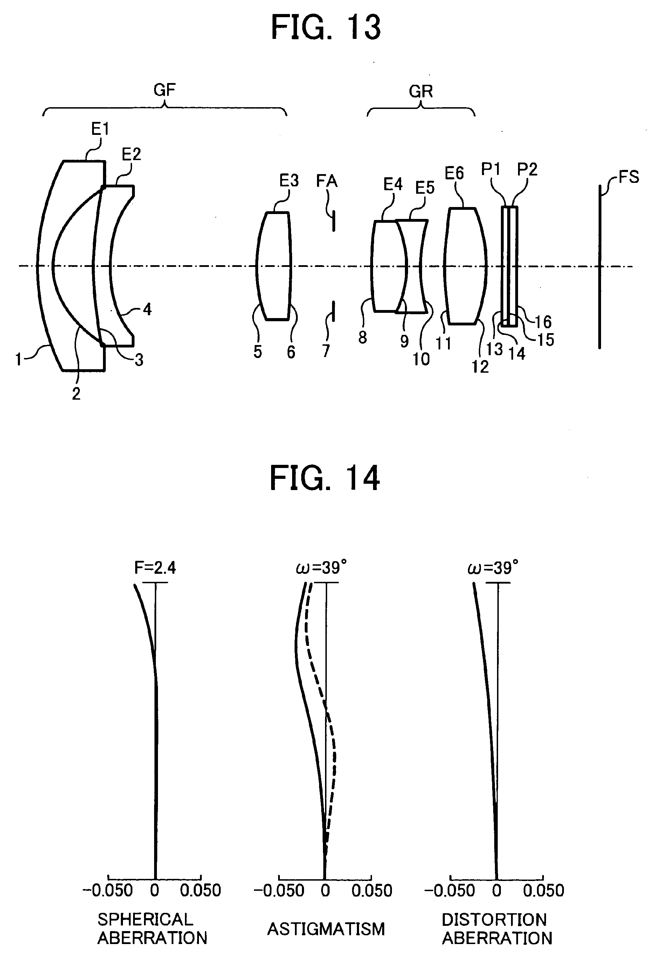

FIG. 13 is a sectional diagram taken along an optical axis, and which shows a structure of a photographic optical system according to a fourth exemplary embodiment of the present invention.

FIG. 14 is an aberration curve diagram showing the respective aberration properties of the spherical aberration, the astigmatism and the distortion aberration when the object distance of the photographic optical system according to the fourth embodiment of the present invention shown in FIG. 13 is the infinity.

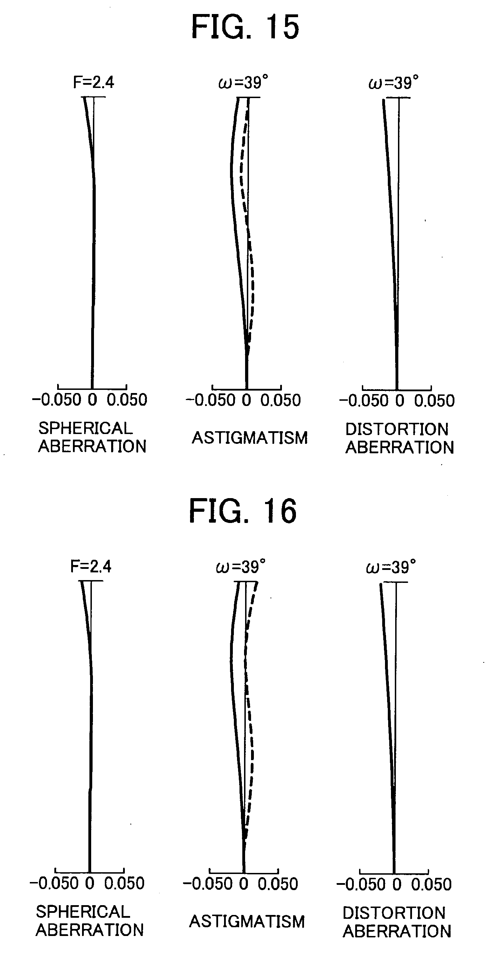

FIG. 15 is an aberration curve diagram showing the respective aberration properties of the spherical aberration, the astigmatism and the distortion aberration when the object distance of the photographic optical system according to the fourth embodiment of the present invention shown in FIG. 13 is one meter and the focusing is performed by extending a rear group.

FIG. 16 is an aberration curve diagram showing the respective aberration properties of the spherical aberration, the astigmatism and the distortion aberration when the object distance is one meter and the focusing is performed by extending the entire groups, in order to compare those with the properties, by the extending of the rear group, of the photographic optical system according to the fourth embodiment of the present invention shown in FIG. 15.

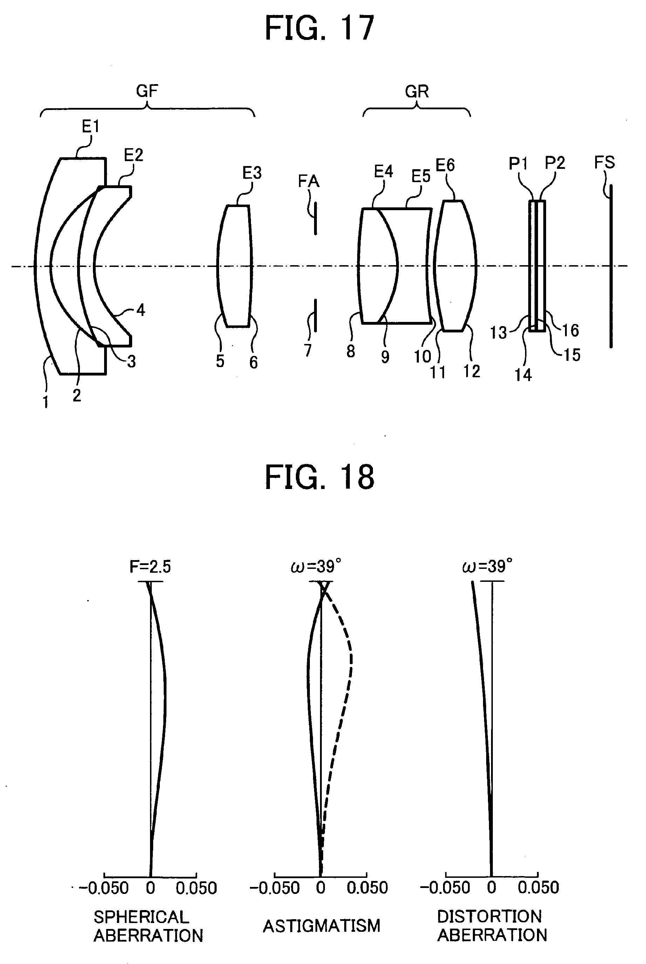

FIG. 17 is a sectional diagram taken along an optical axis, and which shows a structure of a photographic optical system according to a fifth exemplary embodiment of the present invention.

FIG. 18 is an aberration curve diagram showing the respective aberration properties of the spherical aberration, the astigmatism and the distortion aberration when the object distance of the photographic optical system according to the fifth embodiment of the present invention shown in FIG. 17 is the infinity.

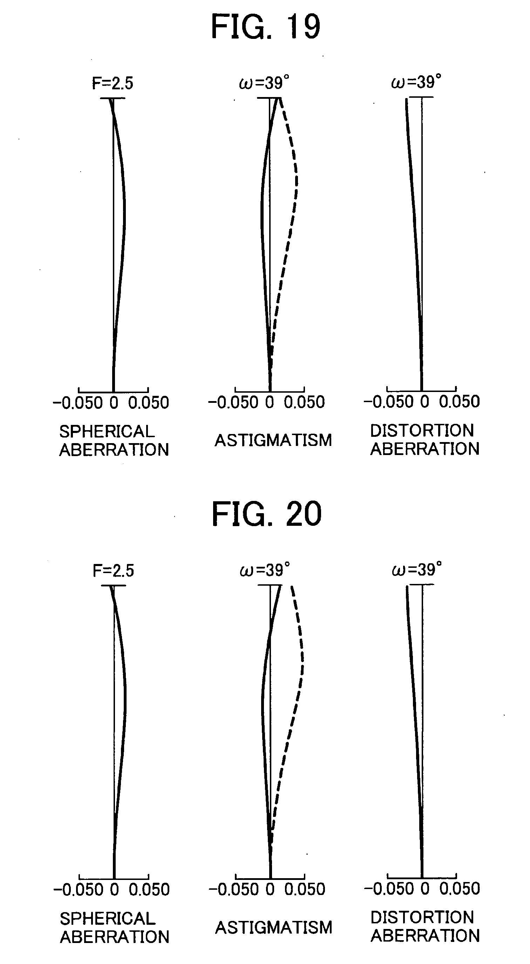

FIG. 19 is an aberration curve diagram showing the respective aberration properties of the spherical aberration, the astigmatism and the distortion aberration when the object distance of the photographic optical system according to the fifth embodiment of the present invention shown in FIG. 17 is one meter and the focusing is performed by extending a rear group.

FIG. 20 is an aberration curve diagram showing the respective aberration properties of the spherical aberration, the astigmatism and the distortion aberration when the object distance is one meter and the focusing is performed by extending the entire groups, in order to compare those with the properties, by the extending of the rear group, of the photographic optical system according to the fifth embodiment of the present invention shown in FIG. 19.

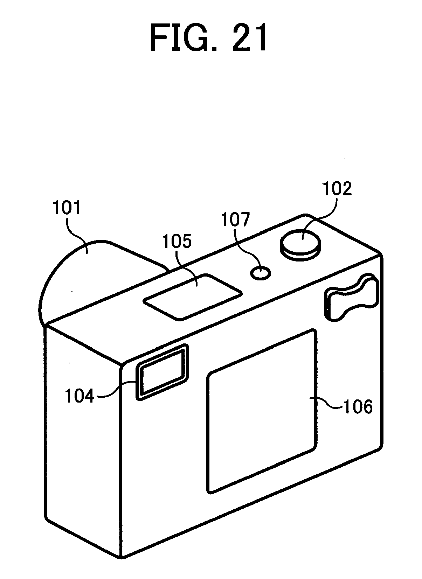

FIG. 21 is a perspective view schematically showing a structure of a main part of a digital camera which includes a photographic optical system according to an embodiment of the present invention as a photographic optical system thereof.

Reference will now be made in detail to the present preferred embodiments of a photographic optical system, a photographic lens unit, a camera and a mobile information terminal according to the present invention, examples of which are illustrated in the accompanying drawings. Wherever possible, the same reference numbers are used in the drawings and the description to refer to the same or like parts. The scope of the present invention, however, is not limited to these embodiments. Within the scope of the present invention, any structure and material described below can be appropriately modified.

Before describing the preferred embodiments of the invention, first of all, a principle structure of the invention and its exemplary embodiments will be described.

A photographic optical system according to the invention disposes, subsequently from an object side toward an image plane side, a first lens structured by a negative meniscus lens facing its convex surface toward the object side, a second lens structured by a negative lens, a third lens structured by a positive lens, a fourth lens structured by a positive lens, a fifth lens structured by a negative lens, and a sixth lens structured by a positive lens. The first lens structured by the negative meniscus lens which faces its convex surface toward the object side, the second lens structured by the negative lens, and the third lens structured by the positive lens are integrally supported to structure a front group. The fourth lens structured by the positive lens and the fifth lens structured by the negative lens are attached together in close and are integrally cemented so as to structure a cemented lens. The cemented lens, structured by the fourth lens and the fifth lens, and the sixth lens structured by the positive lens are integrally supported to structure a rear group. In the photographic optical system according the invention, an adjustment of a focal position due to a change in an object distance, i.e. a photographic object distance, or in other words focusing, is performed by moving the rear group.

Here, when a photographic object moves from infinity to a short distance, a finest surface of a peripheral image changes toward a plus side in a direction of an optical axis of the photographic optical system (it is assumed that a direction from the photographic object toward the image plane is plus) relative to the center of a picture plane. On the other hand; when an interval between the front group and the rear group is changed to be narrow, the finest surface of the peripheral image changes toward a minus side in the optical axis direction. In addition, in a case in which a position of the photographic object has changed, from a state that the photographic object in the infinity is focused, to the short distance and the rear group is moved to bring the photographic object into focus (i.e. performing the focusing), the rear group is moved toward a side of the photographic object. In other words, the interval between the front group and the rear group is narrowed. Therefore, the change in the finest surface of the peripheral image due to alteration of the distance of the photographic object is offset by the movement of the finest surface of the peripheral image due to the change in the interval between the front group and the rear group by an adjustment operation of the focus. As a result, a position of the finest surface of the peripheral image is maintained substantially constant even when the distance of the photographic object is changed, and hence, it is possible to avoid degradation of performance due to the change in the distance of the photographic object.

It is desirable that, in an embodiment of the invention, the photographic optical system according to the invention further satisfy a following conditional formula (1) in addition to the above-described structure.

$$1.5 < fR/f < 3 \qquad (1)$$

wherein, "fR" represents a focal distance of the rear group, and "f" represents a focal distance of the entire system of the photographic optical system.

It is possible to make the above-described change in the finest surface of the peripheral image even small when the conditional formula (1) is satisfied. When an upper limit of the conditional formula (1) is exceeded, the change in the finest surface of the peripheral image due to the change in the interval between the front group and the rear group and the change in the finest surface of the peripheral image due to the alteration of the distance of the photographic object cannot be offset. In addition, when a lower limit of the conditional formula (1) is not satisfied, a refractive power of the rear group is weakened and an amount of movement of the rear group for bringing the photographic object into focus is increased, and consequently, the overall length of the optical system is lengthened. Also, the time required for operation of bringing the photographic object into focus, i.e. the focusing, becomes long.

Additionally, it is desirable that, in an embodiment of the invention, the photographic optical system according to the invention or the above-described embodiment further satisfy a following conditional formula (2) in addition to the above-described structure.

$$1 < fR/f6 < 1.6 \qquad (2)$$

wherein, "fR" represents a focal distance of the rear group, and "f6" represents a focal distance of the positive lens disposed nearest to a side of the image plane in the rear group, i.e. the sixth group.

The conditional formula (2) is for substantially conforming the finest surface of the peripheral image to a finest surface of a center image. When a lower limit of the conditional formula (2) is not satisfied, the finest surface of the peripheral image is biased and positioned nearer to the object side than the finest surface of the center image. Also, when an upper limit of the conditional formula (2) is exceeded, contrarily, the finest surface of the peripheral image is biased and positioned nearer to the side of the image plane than the finest surface of the center image. Therefore, fine image performance on a certain image plane from the center to the periphery thereon cannot be obtained when the conditional formula (2) is not satisfied.

In addition, in the photographic optical system of the invention or the above-described embodiments, it is desirable that a surface which faces toward the image plane side of one of the negative lenses in the front group, i.e. the first lens and the second lens, be aspherical, and that the aspherical surface satisfy the following conditional formula (3), in addition to the above-described structure.

$$0.2 < S/f < 1 \qquad (3)$$

wherein, "S" represents a distance in the optical axis direction between a point where the aspherical surface and the optical axis intersect and a point where the aspherical surface and a principal ray of a light flux reaching a maximum image height intersect, and "f" represents a focal distance of the entire system of the photographic optical system.

When the conditional formula (3) is satisfied, it is possible to compensate distortion aberration further well, and to maintain the distortion aberration well which tends to be deteriorated in accordance with widening of a field angle.

Moreover, in an embodiment of the invention, when the positive lens, disposed near to the object side and the negative lens in the rear group, i.e. the fourth lens and the fifth lens, are cemented, it is possible to effectively suppress a displacement of positions of the lenses occurs while assembling is carried out, and assembling properties are further improved as well.

Furthermore, in the photographic optical system according to one aspect of the invention, an aperture stop is provided between the front group and the rear group. In one embodiment, the aperture stop may be operated integrally with the rear group, i.e. the fourth to the sixth lenses while the focusing is carried out, or in one embodiment, may be fixed integrally with the front group, i.e. the first to the third lenses, while the focusing is carried out.

The photographic lens unit according to the invention is structured by including one of the photographic optical systems described above as an optical system. The camera according to the invention is structured by including one of the photographic optical systems described above as an optical system for photographing. In addition, the mobile information terminal according to the invention is structured by including one of the photographic optical systems described above as an optical system for photographing of a camera function portion.

As described in the foregoing, according to the present invention, it is possible to realize the photographic optical system which is small-sized, which has a wide field angle and a large diameter, and which is possible to obtain high performance in spite of the photographic object distance, without separately providing a special mechanism for compensating the change in the performance occurred in accordance with the variation of the photographic object distance. Similarly, it is possible to structure the photographic lens unit, the camera and the portable information terminal which are small-sized, which have the wide field angle and the large diameter, and possible to obtain the high performance in spite of the photographic object distance by using that photographic optical system. As a result, it is also possible to contribute to resource saving such as reduction of the number of components in the photographic optical system, the photographic lens unit, the camera and the mobile information terminal.

[First embodiment]

Next, preferred embodiments, which are based on the above-described present invention and its embodiments, will be described in detail. First, second, third, fourth and fifth embodiments described hereinafter are preferred embodiments of specific structures, which are on the basis of specific numeric values, of the photographic optical system of the invention. Thereafter, a preferred embodiment of the camera or the mobile information terminal of the invention will be described. The preferred embodiment of the camera or the mobile information terminal employs the photographic lens unit according to the invention, in which the photographic optical system shown by the first to the fifth embodiments for example is used, as an optical system for photographing.

A structure of the photographic optical system and its specific numeric values are shown in each of the first to the fifth embodiments showing the photographic optical system according to the present invention. It will be apparent from the first to the fifth embodiments that the photographic optical system of the invention is possible to accomplish very fine imaging performance while attaining sufficient miniaturization.

In the explanation of the following first to fifth embodiments, various signs are used as below.

An aspherical surface is defined by the following formula:

$$S = \frac{(1/R) \times H^2}{1 + \sqrt{1 - (1+K) \times (1/R)^2 \times H^2}} + \sum_i A_{si} \times H^{2i} \qquad (4)$$

wherein, when height from an optical axis is "H", an amount of displacement in an optical axis direction from a surface peak is "S", a curvature radius is "R" and an aspherical surface coefficient is "$A_{2i}$".

In addition, "f" represents a focal distance of an entire system, a surface interval is equivalent to lens thickness or a lens interval, "Nd" represents a refractive index of a "d" line, and "$\upsilon d$" represents an abbe number of the "d" line. Moreover, "K" is a conical constant of the aspherical surface, $A_4$ is a fourth-order aspherical surface coefficient, $A_6$ is a sixth-order aspherical surface coefficient, $A_8$ is an eighth-order aspherical surface coefficient, and $A_{10}$ is a tenth-order aspherical surface coefficient.

Also, in each of the preferred embodiments of the first to the fifth embodiments, parallel plates located between a sixth lens, which is disposed nearest to a side of an image plane and has a positive refractive power, and the image plane are filters such as a crystal low-pass filter and an infrared-cut filter, or a guard glass for protection of an image pick-up device such as a CCD image pick-up device for example.

FIG. 1 shows a structure of a photographic optical system, taken along the optical axis to show a schematic vertical section thereof, according to the first embodiment of the invention. The optical system shown in FIG. 1 has a structure

in which, subsequently from an object side toward a side of the image plane, a first lens E1 structured by a negative lens of a negative meniscus type which faces a powerful concave surface, formed aspherical, toward the image plane side, a second lens E2 structured by a negative lens of a negative meniscus type which faces its weak convex surface toward the object side, a third lens E3 as a positive lens of a both convex type, an aperture stop FA, a cemented lens structured by attaching a fourth lens E4 as a positive lens of a both convex type and a fifth lens E5 as a negative lens of a both concave type together in close, and a sixth lens E6 as a positive lens of a both convex type in which both surfaces thereof are formed aspherical, are arranged. The first lens E1 to the third lens E3 structure a front group GF, whereas the fourth lens E4 to the sixth lens E6 structure a rear group GR. The rear group GR is moved together with the aperture stop FA to be extended so as to perform focusing.

In the photographic optical system of a camera of a type, for example a digital still camera, which uses a solid-state image pick-up device such as a CCD image pick-up device or the like, for example, two parallel plate glasses P1 and P2, which structure at least one of a low-pass filter, the infrared-cut filter and a cover glass or the like for protection of a light-receiving surface of the CCD image pick-up device, are inserted between a last surface of the sixth lens E6 and the image plane FS. Therefore, each of the lens structure, data and aberration diagrams in the first to the fifth embodiments represents a state in which the two parallel plate glasses P1 and P2 are arranged between the last surface of a photographing lens and the image plane. In addition, FIG. 1 also shows a surface number for each optical surface. Here, each of the reference numerals used in FIG. 1 of the first embodiment is used independently with respect to the other embodiments, in order to avoid the explanation to be complicated. Therefore, although the reference numerals common to those in FIGs. 5, 9, 13 and 17 are attached in FIG. 1, these do not represent the structures common to those in the other embodiments.

Also, FIG. 2 is an aberration diagram showing each spherical aberration, astigmatism and distortion aberration when an object distance in the optical system of FIG. 1 is infinity. FIG. 3 is an aberration diagram showing each of the spherical aberration, the astigmatism and the distortion aberration when the object distance of the optical system of FIG. 1 is one meter and focusing is performed by extending the rear group only. In addition, FIG. 4 is an aberration diagram showing each of the spherical aberration, the astigmatism and the distortion aberration when the object distance in the optical system of FIG. 1 is one meter but the focusing is performed by extending the entire groups of the photographic optical system, not by the extending of only the rear group according to the present invention, for the purpose of comparison.

In the first embodiment, a focal distance "f" equals 5.9 mm, an F-number equals 2.4, and a half field angle "$\omega$" equals 39 degrees. The characteristics of each of the optical surfaces are as shown in the table below.

[Table 1]

Optical characteristic

| Surface | Curvature radius | Interval | Nd | υd | Lens etc. | Group |
|---|---|---|---|---|---|---|
| 1 | 20.00000 | 1.20000 | 1.50670 | 70.50 | E1 | GF |
| 2* | 5.57082 | 4.16911 | 1.00000 | | | |
| 3 | 233.39315 | 1.20000 | 1.48749 | 70.24 | E2 | |
| 4 | 8.57875 | 6.05525 | 1.00000 | | | |
| 5 | 13.38842 | 3.21692 | 1.83400 | 37.16 | E3 | |
| 6 | -72.20394 | 6.83043 | 1.00000 | | | |
| 7 | 0.00000 | 0.50000 | 1.00000 | | FA | GR |
| 8 | 26.30826 | 2.92974 | 1.60311 | 60.64 | E4 | |
| 9 | -4.88342 | 1.00000 | 1.76182 | 26.52 | E5 | |
| 10 | 46.92083 | 2.59977 | 1.00000 | | | |
| 11* | 20.62656 | 3.30000 | 1.75512 | 45.60 | E6 | |
| 12* | -11.06525 | 3.74968 | 1.00000 | | | |
| 13 | 0.00000 | 0.40000 | 1.69572 | 52.80 | P1 | |
| 14 | 0.00000 | 0.10000 | 1.00000 | | | |
| 15 | 0.00000 | 0.50000 | 1.51680 | 64.10 | P2 | |
| 16 | 0.00000 | 37.75091 | 1.00000 | | | |

In Table 1, each of the optical surfaces shown by attaching an asterisk "*" on the surface numbers, which are the second surface, the eleventh surface and the twelfth surface, is aspherical. The parameters of each of those aspherical surfaces in the above formula (4) are as follows:

[Table 2]

| Aspherical surface coefficient | | | | | |
|---|---|---|---|---|---|
| Surface | K | $A_4$ | $A_6$ | $A_8$ | $A_{10}$ |
| 2 | -0.59139 | $7.18861 \times 10^{-5}$ | $-3.01699 \times 10^{-7}$ | $3.93761 \times 10^{-8}$ | $-4.40554 \times 10^{-10}$ |
| 11 | -12.17734 | $7.37639 \times 10^{-7}$ | $5.29092 \times 10^{-7}$ | $3.26981 \times 10^{-8}$ | $2.18313 \times 10^{-10}$ |
| 12 | -0.23087 | $9.07811 \times 10^{-5}$ | $4.39028 \times 10^{-7}$ | $2.34009 \times 10^{-8}$ | $7.35871 \times 10^{-10}$ |

In addition, a numeric value, in the first embodiment, of each {fR/f} according to the conditional formula (1), {fR/f6} according to the conditional formula (2), and {S/f} according to the conditional formula (3) described above is as follows.

Numeric value of each conditional formula

Conditional formula (1) = 2.1
Conditional formula (2) = 1.2
Conditional formula (3) = 0.5

Therefore, each of the numeric values in the first embodiment of the invention according to the respective conditional formulas mentioned in the foregoing is in a range of each of those conditional formulas.

FIGs. 2 to 4 each shows aberration curves of respective aberrations of the photographic optical system shown in FIG. 1 according to the first embodiment described above, in which FIG. 2 shows aberration curves when the object distance is the infinity, FIG. 3 shows aberration curves in the case in which the focusing is carried out by the movement of the rear group according to the invention when the object distance is one meter, and FIG. 4 shows aberration curves in the case in which the focusing is carried out by the movement of the entire groups, unlike the present invention, when the object distance is one meter. In each of the aberration curves, a broken line in spherical aberration represents a sine condition, and a solid line and a broken line in astigmatism represent sagittal and meridional, respectively.

It can be seen from the photographic optical system of the structure shown in FIG. 1 according to the above-described first embodiment of the invention that the astigmatism is compensated or suppressed well, and planarity of the image plane is improved, as shown in FIGs. 2 and 3.

[Second embodiment]

FIG. 5 shows a structure of a photographic optical system, taken along the optical axis to show a schematic vertical section thereof, according to the second embodiment of the invention. The optical system shown in FIG. 5 has a structure
in which, subsequently from an object side toward a side of an image plane, a first lens E1 structured by a negative lens of a negative meniscus type which faces a powerful concave surface, formed aspherical, toward the image plane side, a second lens E2 as a negative lens of a both concave type, a third lens E3 as a positive lens of a both convex type, an aperture stop FA, a cemented lens structured by attaching a fourth lens E4 as a positive lens of a both convex type and a fifth lens E5 as a negative lens of a both concave type together in close, and a sixth lens E6 as a positive lens of a both convex type in which both surfaces thereof are formed aspherical, are arranged. The first lens E1 to the third lens E3 structure a front group GF, whereas the fourth lens E4 to the sixth lens E6 structure a rear group GR. The rear group GR is moved together with the aperture stop FA to be extended so as to perform focusing.

In the second embodiment, for example, two parallel plate glasses P1 and P2, which structure at least one of the low-pass filter, the infrared-cut filter and the cover glass or the like for protection of the light-receiving surface of the CCD image pick-up device, are inserted as well between a last surface of the sixth lens E6 and the image plane FS. In addition, FIG. 5 also shows a surface number for each optical surface. Here, each of the reference numerals used in FIG. 5 of the second embodiment is used independently with respect to the other embodiments, in order to avoid the explanation to be complicated. Therefore, although the reference numerals common to those in FIGs. 1, 9, 13 and 17 are attached in FIG. 5, these do not represent the structures common to those in the other embodiments.

Also, FIG. 6 is an aberration diagram showing each spherical aberration, astigmatism and distortion aberration when an object distance in the optical system of FIG. 5 is infinity. FIG. 7 is an aberration diagram showing each of the spherical aberration, the astigmatism and the distortion aberration when the object distance of the optical system of FIG. 5 is one meter and focusing is performed by extending the rear group only. In addition, FIG. 8 is an aberration diagram showing each of the spherical aberration, the astigmatism and the distortion aberration when the object distance in the optical system of FIG. 5 is one meter but the focusing is performed by extending the entire groups of the photographic optical system, not by the extending of only the rear group, for the purpose of comparison.

In the second embodiment, a focal distance "f" equals 5.9 mm, an F-number equals 1.9, and a half field angle "ω" equals 38 degrees. The characteristics of each of the optical surfaces are as shown in the table below.

[Table 3]

Optical characteristics

| Surface | Curvature radius | Interval | Nd | υd | Lens etc. | Group |
|---|---|---|---|---|---|---|
| 1 | 20.01297 | 1.20000 | 1.50670 | 70.50 | E1 | GF |
| 2* | 7.24660 | 8.58667 | 1.00000 | | | |
| 3 | -60.39728 | 1.20000 | 1.48749 | 70.24 | E2 | |
| 4 | 13.57365 | 9.83013 | 1.00000 | | | |
| 5 | 27.44651 | 3.94912 | 1.83400 | 37.16 | E3 | |
| 6 | -70.43737 | 15.29383 | 1.00000 | | | |
| 7 | 0.00000 | 0.50000 | 1.00000 | | FA | GR |
| 8 | 14.43104 | 3.51511 | 1.60311 | 60.64 | E4 | |
| 9 | -9.76245 | 3.00000 | 1.76182 | 26.52 | E5 | |
| 10 | 27.23634 | 2.50300 | 1.00000 | | | |
| 11* | 22.53692 | 3.30000 | 1.75512 | 45.60 | E6 | |
| 12* | -16.48834 | 1.43089 | 1.00000 | | | |
| 13 | 0.00000 | 0.40000 | 1.69572 | 52.80 | P1 | |
| 14 | 0.00000 | 0.10000 | 1.00000 | | | |
| 15 | 0.00000 | 0.50000 | 1.51680 | 64.10 | P2 | |
| 16 | 0.00000 | 55.30875 | 1.00000 | | | |

In Table 3, each of the optical surfaces shown by attaching an asterisk "*" on the surface numbers, which are the second surface, the eleventh surface and the twelfth surface, is aspherical. The parameters of each of those aspherical surfaces in the above formula (4) are as follows:

[Table 4]

| Aspherical surface coefficient | | | | | |
|---|---|---|---|---|---|
| Surface | K | $A_4$ | $A_6$ | $A_8$ | $A_{10}$ |
| 2 | -0.53139 | $2.27009 \times 10^{-5}$ | $-9.51317 \times 10^{-8}$ | $3.22920 \times 10^{-9}$ | $-6.82426 \times 10^{-12}$ |
| 11 | -11.08497 | $-4.24915 \times 10^{-5}$ | $-1.88845 \times 10^{-6}$ | $1.74866 \times 10^{-8}$ | $-1.14696 \times 10^{-9}$ |
| 12 | 0.65670 | $3.90543 \times 10^{-6}$ | $-1.28262 \times 10^{-6}$ | $1.91530 \times 10^{-8}$ | $-1.01351 \times 10^{-9}$ |

In addition, a numeric value, in the second embodiment, of each {fR/f} according to the conditional formula (1), {fR/f6} according to the conditional formula (2), and {S/f} according to the conditional formula (3) described above is as follows.

Numeric value of each conditional formula

Conditional formula (1) = 2.5
Conditional formula (2) = 1.1
Conditional formula (3) = 0.9

Therefore, each of the numeric values in the second embodiment of the invention according to the respective conditional formulas mentioned in the foregoing is in a range of each of those conditional formulas.

FIGs. 6 to 8 each shows aberration curves of respective aberrations of the photographic optical system shown in FIG. 5 according to the second embodiment described above, in which FIG. 6 shows aberration curves when the object distance is the infinity, FIG. 7 shows aberration curves in the case in which the focusing is carried out by the movement of the rear group according to the invention when the object distance is one meter, and FIG. 8 shows aberration curves in the case in which the focusing is carried out by the movement of the entire groups, unlike the present invention, when the object distance is one meter. In each of the aberration curves, a broken line in spherical aberration represents a sine condition, and a solid line and a broken line in astigmatism represent sagittal and meridional, respectively.

It can be seen as well from the photographic optical system of the structure shown in FIG. 5 according to the above-described second embodiment of the invention that the astigmatism is compensated or suppressed well, and planarity of the image plane is improved, as shown in FIGs. 6 and 7.


[Third embodiment]

FIG. 9 shows a structure of a photographic optical system, taken along the optical axis to show a schematic vertical section thereof, according to the third embodiment of the invention. The optical system shown in FIG. 9 has a structure
in which, subsequently from an object side toward a side of an image plane, a first lens E1 structured by a negative lens of a negative meniscus type which faces a powerful concave surface, formed aspherical, toward the image plane side, a second lens E2 as a negative lens of a both concave type, a third lens E3 as a positive lens of a both convex type, an aperture stop FA, a fourth lens E4 as a positive lens of a both convex type, a fifth lens E5 as a negative lens of a both concave type, and a sixth lens E6 as a positive lens of a both convex type in which both surfaces thereof are formed aspherical, are arranged. The first lens E1 to the third lens E3 structure a front group GF, whereas the fourth lens E4 to the sixth lens E6 structure a rear group GR. The rear group GR is moved together with the aperture stop FA to be extended so as to perform focusing.

In the third embodiment, for example, two parallel plate glasses P1 and P2, which structure at least one of the low-pass filter, the infrared-cut filter and the cover glass or the like for protection of the light-receiving surface of the CCD image pick-up device, are inserted as well between a last surface of the sixth lens E6 and the image plane FS. In addition, FIG. 9 also shows a surface number for each optical surface. Here, each of the reference numerals used in FIG. 9 of the third embodiment is used independently with respect to the other embodiments, in order to avoid the explanation to be complicated. Therefore, although the reference numerals common to those in FIGs. 1, 5, 13 and 17 are attached in FIG. 9, these do not represent the structures common to those in the other embodiments.

Also, FIG. 10 is an aberration diagram showing each spherical aberration, astigmatism and distortion aberration when an object distance in the optical system of FIG. 9 is infinity. FIG. 11 is an aberration diagram showing each of the spherical aberration, the astigmatism and the distortion aberration when the object distance of the optical system of FIG. 9 is one meter and focusing is performed by extending the rear group only. In addition, FIG. 12 is an aberration diagram showing each of the spherical aberration, the astigmatism and the distortion aberration when the object distance in the optical system of FIG. 9 is one meter but the focusing is performed by extending the entire groups of the photographic optical system, not by the extending of only the rear group, for the purpose of comparison.

In the third embodiment, a focal distance "f" equals 5.9 mm, an F-number equals 2.4, and a half field angle "ω" equals 39 degrees. The characteristics of each of the optical surfaces are as shown in the table below.

[Table 5]

| Optical characteristics | | | | | | |
|---|---|---|---|---|---|---|
| Surface | Curvature radius | Interval | Nd | υd | Lens etc. | Group |
| 1 | 12.12082 | 1.20000 | 1.51633 | 64.14 | E1 | GF |
| 2* | 4.98379 | 3.91482 | 1.00000 | | | |
| 3 | -54.88514 | 1.00000 | 1.48749 | 70.24 | E2 | |
| 4 | 8.06456 | 3.23201 | 1.00000 | | | |
| 5 | 12.57830 | 2.79137 | 1.83400 | 37.16 | E3 | |
| 6 | -61.30860 | 5.12323 | 1.00000 | | | |
| 7 | 0.00000 | 0.61808 | 1.00000 | | FA | GR |
| 8 | 14.18384 | 3.00000 | 1.77250 | 49.60 | E4 | |
| 9 | -9.54543 | 0.50000 | 1.00000 | | | |
| 10 | -6.75278 | 1.00000 | 1.84666 | 23.78 | E5 | |
| 11 | 11.89396 | 1.07016 | 1.00000 | | | |
| 12* | 15.36484 | 3.91889 | 1.73310 | 48.90 | E6 | |
| 13* | -6.85104 | 7.04274 | 1.00000 | | | |
| 14 | 0.00000 | 0.40000 | 1.69572 | 52.80 | P1 | |
| 15 | 0.00000 | 0.10000 | 1.00000 | | | |
| 16 | 0.00000 | 0.50000 | 1.51680 | 64.10 | P2 | |
| 17 | 0.00000 | 35.41131 | 1.00000 | | | |

In Table 5, each of the optical surfaces shown by attaching an asterisk "*" on the surface numbers, which are the second surface, the twelfth surface and the thirteenth surface, is aspherical. The parameters of each of those aspherical surfaces in the above formula (4) are as follows:

[Table 6]

| Aspherical surface coefficient | | | | | |
|---|---|---|---|---|---|
| Surface | K | $A_4$ | $A_6$ | $A_8$ | $A_{10}$ |
| 2 | -0.38285 | $5.39062 \times 10^{-6}$ | $-2.60285 \times 10^{-6}$ | $1.10395 \times 10^{-7}$ | $-2.25906 \times 10^{-9}$ |
| 12 | -18.82807 | $9.64211 \times 10^{-5}$ | $-8.37056 \times 10^{-6}$ | $8.89707 \times 10^{-9}$ | $1.17225 \times 10^{-9}$ |
| 13 | -0.33710 | $1.25082 \times 10^{-4}$ | $-3.32124 \times 10^{-6}$ | $5.40715 \times 10^{-8}$ | $-5.54331 \times 10^{-9}$ |

In addition, a numeric value, in the third embodiment, of each {fR/f} according to the conditional formula (1), {fR/f6} according to the conditional formula (2), and {S/f} according to the conditional formula (3) described above is as follows.

Numeric value of each conditional formula

Conditional formula (1) = 1.6
Conditional formula (2) = 1.5
Conditional formula (3) = 0.5

Therefore, each of the numeric values in the third embodiment of the invention according to the respective conditional formulas mentioned in the foregoing is in a range of each of those conditional formulas.

FIGs. 10 to 12 each shows aberration curves of respective aberrations of the photographic optical system shown in FIG. 9 according to the third embodiment described above, in which FIG. 10 shows aberration curves when the object distance is the infinity, FIG. 11 shows aberration curves in the case in which the focusing is carried out by the movement of the rear group according to the invention when the object distance is one meter, and FIG. 12 shows aberration curves in the case in which the focusing is carried out by the movement of the entire groups, unlike the present invention, when the object distance is one meter. In each of the aberration curves, a broken line in spherical aberration represents a sine condition, and a solid line and a broken line in astigmatism represent sagittal and meridional, respectively.

It can be seen as well from the photographic optical system of the structure shown in FIG. 9 according to the above-described third embodiment of the invention that the astigmatism is compensated or suppressed well, and planarity of the image plane is improved, as shown in FIGs. 10 and 11.

[Fourth embodiment]

FIG. 13 shows a structure of a photographic optical system, taken along the optical axis to show a schematic vertical section thereof, according to the fourth embodiment of the invention. The optical system shown in FIG. 13 has a structure in which, subsequently from an object side toward a side of an image plane, a first lens E1 structured by a negative lens of a negative meniscus type which faces a powerful concave surface, formed aspherical, toward the image plane side, a second lens E2 structured by a negative lens of a negative meniscus type which faces a powerful concave surface toward the image plane side, a third lens E3 as a positive lens of a both convex type, an aperture stop FA, a cemented lens structured by attaching a fourth lens E4 as a positive lens of a both convex type in which a convex surface thereof facing toward the object side is formed aspherical and a fifth lens E5 as a negative lens of a both concave type together in close, and a sixth lens E6 as a positive lens of a both convex type in which both surfaces thereof are formed aspherical, are arranged. The first lens E1 to the third lens E3 structure a front group GF, whereas the fourth lens E4 to the sixth lens E6 structure a rear group GR. In this case, focusing may be carried out by moving the rear group GR to extend the rear group GR while the aperture stop FA is fixed together with the front group GF, or may be carried by moving the rear group GR together with the aperture stop FA so as to extend.

In the fourth embodiment, for example, two parallel plate glasses P1 and P2, which structure at least one of the low-pass filter, the infrared-cut filter and the cover glass or the like for protection of the light-receiving surface of the CCD image pick-up device, are inserted as well between a last surface of the sixth lens E6 and the image plane FS. In addition, FIG. 13 also shows a surface number for each optical surface. Here, each of the reference numerals used in FIG. 13 of the fourth embodiment is used independently with respect to the other embodiments, in order to avoid the explanation to be complicated. Therefore, although the reference numerals common to those in FIGs. 1, 5, 9 and 17 are attached in FIG. 13, these do not represent the structures common to those in the other embodiments.

Also, FIG. 14 is an aberration diagram showing each spherical aberration, astigmatism and distortion aberration when an object distance in the optical system of FIG. 13 is infinity. FIG. 15 is an aberration diagram showing each of the spherical aberration, the astigmatism and the distortion aberration when the object distance of the optical system of FIG. 13 is one meter and focusing is performed by extending the rear group only. In addition, FIG. 16 is an aberration diagram showing each of the spherical aberration, the astigmatism and the distortion aberration when the object distance in the optical system of FIG. 13 is one meter but the focusing is performed by extending the entire groups of the photographic optical system, not by the extending of only the rear group, for the purpose of comparison.

In the fourth embodiment, a focal distance "f" equals 5.9 mm, an F-number equals 2.4, and a half field angle "ω" equals 39 degrees. The characteristics of each of the optical surfaces are as shown in the table below.

[Table 7]

Optical characteristics

| Surface | Curvature radius | Interval | Nd | υd | Lens etc. | Group |
|---|---|---|---|---|---|---|
| 1 | 20.00000 | 1.20000 | 1.50670 | 70.50 | E1 | GF |
| 2* | 5.58820 | 3.11692 | 1.00000 | | | |
| 3 | 27.22931 | 1.20000 | 1.48749 | 70.24 | E2 | |
| 4 | 8.55545 | 11.38598 | 1.00000 | | | |
| 5 | 12.39990 | 2.53410 | 1.77250 | 49.60 | E3 | |
| 6 | -102.07393 | 3.26985 | 1.00000 | | | |
| 7 | 0.00000 | 3.02599 | 1.00000 | | FA | |
| 8* | 20.15072 | 2.79581 | 1.63246 | 63.80 | E4 | GR |
| 9 | -6.34552 | 1.00000 | 1.69895 | 30.13 | E5 | |
| 10 | 14.87389 | 1.70852 | 1.00000 | | | |
| 11* | 18.55443 | 3.30000 | 1.63246 | 63.80 | E6 | |
| 12* | -11.20068 | 1.14612 | 1.00000 | | | |
| 13 | 0.00000 | 0.40000 | 1.69572 | 52.80 | P1 | |
| 14 | 0.00000 | 0.10000 | 1.00000 | | | |
| 15 | 0.00000 | 0.50000 | 1.51680 | 64.10 | P2 | |
| 16 | 0.00000 | 36.68329 | 1.00000 | | | |

In Table 7, each of the optical surfaces shown by attaching an asterisk "*" on the surface numbers, which are the second surface, the eighth surface, the eleventh surface and the twelfth surface, is aspherical. The parameters of each of those aspherical surfaces in the above formula (4) are as follows:

[Table 8]

| Aspherical surface coefficient | | | | | |
|---|---|---|---|---|---|
| Surface | K | $A_4$ | $A_6$ | $A_8$ | $A_{10}$ |
| 2 | -0.64345 | $1.28304 \times 10^{-4}$ | $1.30318 \times 10^{-6}$ | $1.26098 \times 10^{-8}$ | $4.85725 \times 10^{-10}$ |
| 8 | -15.67204 | $-6.57759 \times 10^{-5}$ | $-9.64821 \times 10^{-6}$ | $1.84617 \times 10^{-7}$ | $-1.06136 \times 10^{-8}$ |
| 11 | -7.73907 | $-1.06076 \times 10^{-5}$ | $1.82742 \times 10^{-6}$ | $2.36635 \times 10^{-7}$ | $-2.15200 \times 10^{-9}$ |
| 12 | -0.07258 | $5.25211 \times 10^{-5}$ | $-1.65335 \times 10^{-6}$ | $2.12773 \times 10^{-7}$ | $3.54501 \times 10^{-10}$ |

In addition, a numeric value, in the fourth embodiment, of each {fR/f} according to the conditional formula (1), {fR/f6} according to the conditional formula (2), and {S/f} according to the conditional formula (3) described above is as follows.

Numeric value of each conditional formula

Conditional formula (1) = 2.6
Conditional formula (2) = 1.3
Conditional formula (3) = 0.5

Therefore, each of the numeric values in the fourth embodiment of the invention according to the respective conditional formulas mentioned in the foregoing is in a range of each of those conditional formulas.

FIGs. 14 to 16 each shows aberration curves of respective aberrations of the photographic optical system shown in FIG. 13 according to the fourth embodiment described above, in which FIG. 14 shows aberration curves when the object distance is the infinity, FIG. 15 shows aberration curves in the case in which the focusing is carried out by the movement of the rear group according to the invention when the object distance is one meter, and FIG. 16 shows aberration curves in the case in which the focusing is carried out by the movement of the entire groups, unlike the present invention, when the object distance is one meter. In each of the aberration curves, a broken line in spherical aberration represents a sine condition, and a solid line and a broken line in astigmatism represent sagittal and meridional, respectively.

It can be seen as well from the photographic optical system of the structure shown in FIG. 13 according to the above-described fourth embodiment of the invention that the astigmatism is compensated or suppressed well, and planarity of the image plane is improved, as shown in FIGs. 14 and 15.

[Fifth embodiment]

FIG. 17 shows a structure of a photographic optical system, taken along the optical axis to show a schematic vertical section thereof, according to the fifth embodiment of the invention. The optical system shown in FIG. 17 has a structure in which, subsequently from an object side toward a side of an image plane, a first lens E1 structured by a negative lens of a negative meniscus type which faces a powerful concave surface toward the image plane side, a second lens E2 structured by a negative lens of a negative meniscus type which faces a powerful concave surface, formed aspherical, toward the image plane side, a third lens E3 as a positive lens of a both convex type, an aperture stop FA, a cemented lens structured by attaching a fourth lens E4 as a positive lens of a both convex type in which a convex surface thereof facing toward the object side is formed aspherical and a fifth lens E5 as a negative lens of a both concave type together in close, and a sixth lens E6 as a positive lens of a both convex type in which both surfaces thereof are formed aspherical, are arranged. The first lens E1 to the third lens E3 structure a front group GF, whereas the fourth lens E4 to the sixth lens E6 structure a rear group GR. In this case, similar to the fourth embodiment, focusing may be carried out by moving the rear group GR to extend the rear group GR while the aperture stop FA is fixed together with the front group GF, or may be carried by moving the rear group GR together with the aperture stop FA so as to extend.

In the fifth embodiment, for example, two parallel plate glasses P1 and P2, which structure at least one of the low-pass filter, the infrared-cut filter and the cover glass or the like for protection of the light-receiving surface of the CCD image pick-up device, are inserted as well between a last surface of the sixth lens E6 and the image plane FS. In addition, FIG. 17 also shows a surface number for each optical surface. Here, each of the reference numerals used in FIG. 17 of the fifth embodiment is used independently with respect to the other embodiments, in order to avoid the explanation to be complicated. Therefore, although the reference numerals common to those in FIGs. 1, 5, 9 and 13 are attached in FIG. 17, these do not represent the structures common to those in the other embodiments.

Also, FIG. 18 is an aberration diagram showing each spherical aberration, astigmatism and distortion aberration when an object distance in the optical system of FIG. 17 is infinity. FIG. 19 is an aberration diagram showing each of the spherical aberration, the astigmatism and the distortion aberration when the object distance of the optical system of FIG. 17 is one meter and focusing is performed by extending the rear group only. In addition, FIG. 20 is an aberration diagram showing each of the spherical aberration, the astigmatism and the distortion aberration when the object distance in the optical system of FIG. 17 is one meter but the focusing is performed by extending the entire groups of the photographic optical system, not by the extending of only the rear group, for the purpose of comparison.

In the fifth embodiment, a focal distance "f" equals 5.9 mm, an F-number equals 2.5, and a half field angle "$\omega$" equals 39 degrees. The characteristics of each of the optical surfaces are as shown in the table below.

[Table 9]

Optical characteristics

| Surface | Curvature radius | Interval | Nd | υd | Lens etc. | Group |
|---|---|---|---|---|---|---|
| 1 | 20.00000 | 1.20000 | 1.49700 | 81.54 | E1 | GF |
| 2 | 6.44721 | 2.22168 | 1.00000 | | | |
| 3 | 12.07602 | 1.20000 | 1.51633 | 64.06 | E2 | |
| 4* | 4.90083 | 9.36118 | 1.00000 | | | |
| 5 | 15.23785 | 2.71714 | 1.77250 | 49.60 | E3 | |
| 6 | -54.09966 | 4.80000 | 1.00000 | | | |
| 7 | 0.00000 | 3.15617 | 1.00000 | | FA | |
| 8* | 29.11419 | 3.07081 | 1.63246 | 63.80 | E4 | GR |
| 9 | -6.84486 | 2.21241 | 1.69895 | 30.13 | E5 | |
| 10 | 27.06098 | 0.50000 | 1.00000 | | | |
| 11* | 16.12779 | 3.30000 | 1.63246 | 63.80 | E6 | |
| 12* | -11.21035 | 4.06448 | 1.00000 | | | |
| 13 | 0.00000 | 0.40000 | 1.69572 | 52.80 | P1 | |
| 14 | 0.00000 | 0.10000 | 1.00000 | | | |
| 15 | 0.00000 | 0.50000 | 1.51680 | 64.10 | P2 | |
| 16 | 0.00000 | 38.80388 | 1.00000 | | | |

In Table 9, each of the optical surfaces shown by attaching an asterisk "*" on the surface numbers, which are the fourth surface, the eighth surface, the eleventh surface and the twelfth surface, is aspherical. The parameters of each of those aspherical surfaces in the above formula (4) are as follows:

[Table 10]

| Aspherical surface coefficient | | | | | |
|---|---|---|---|---|---|
| Surface | K | $A_4$ | $A_6$ | $A_8$ | $A_{10}$ |
| 4 | -0.78445 | $-3.85507\times10^{-5}$ | $-4.36801\times10^{-6}$ | $-6.27056\times10^{-8}$ | $-5.83772\times10^{-9}$ |
| 8 | -23.01828 | $-2.06042\times10^{-5}$ | $2.18163\times10^{-6}$ | $-4.49326\times10^{-7}$ | $1.20317\times10^{-8}$ |
| 11 | -9.23197 | $5.22275\times10^{-6}$ | $4.90062\times10^{-7}$ | $-6.62226\times10^{-8}$ | $1.95709\times10^{-9}$ |
| 12 | -0.11824 | $7.62619\times10^{-5}$ | $-8.69697\times10^{-7}$ | $1.62781\times10^{-8}$ | $2.56384\times10^{-10}$ |

In addition, a numeric value, in the fifth embodiment, of each {fR/f} according to the conditional formula (1), {fR/f6} according to the conditional formula (2), and {S/f} according to the conditional formula (3) described above is as follows.

Numeric value of each conditional formula

Conditional formula (1) = 2.2
Conditional formula (2) = 1.2
Conditional formula (3) = 0.3

Therefore, each of the numeric values in the fifth embodiment of the invention according to the respective conditional formulas mentioned in the foregoing is in a range of each of those conditional formulas.

FIGs. 18 to 20 each shows aberration curves of respective aberrations of the photographic optical system shown in FIG. 17 according to the fifth embodiment described above, in which FIG. 18 shows aberration curves when the object distance is the infinity, FIG. 19 shows aberration curves in the case in which the focusing is carried out by the movement of the rear group according to the invention when the object distance is one meter, and FIG. 20 shows aberration curves in the case in which the focusing is carried out by the movement of the entire groups, unlike the present invention, when the object distance is one meter. In each of the aberration curves, a broken line in spherical aberration represents a sine condition, and a solid line and a broken line in astigmatism represent sagittal and meridional, respectively.

It can be seen as well from the photographic optical system of the structure shown in FIG. 17 according to the above-described fifth embodiment of the invention that the astigmatism is compensated or suppressed well, and planarity of the image plane is improved, as shown in FIGs. 18 and 19.

Next, a digital camera according to an embodiment of the present invention will be described with reference to FIG. 21. In the digital camera according to the embodiment, the camera (digital camera in the present embodiment) is structured by employing a photographic lens unit, constructed by utilizing the photographic optical system according to the present invention shown in the above-described first to the fifth embodiment for example, as an optical system for photographing. FIG. 21 is a perspective view schematically showing an external appearance of the digital camera seen from a rear side, i.e., seen from a photographer's side.

Note that explanation of the embodiment here is based on the camera. However, in recent years, there have been appeared mobile information terminals such as a so-called PDA (Personal Data Assistant), a mobile phone and so on, having a camera function or functional part installed therein. Many of such mobile information terminals, although the appearance is slightly different to the camera, also have the function and the structure substantially identical to the function and the structure of the camera. Therefore, the photographic optical system according to the present invention may be employed in such mobile information terminals as the optical system for photographing.

As shown schematically in FIG. 21, the digital camera is provided with a photographing lens unit 101, a shutter release button 102, an optical viewfinder 104, a liquid crystal display portion 105, a liquid crystal monitor 106 and a main switch 107, and so on.

The digital camera includes the photographing lens unit 101, and a light-receiving element (not shown) as an area sensor such as a CCD (Charge Coupled Device) image pickup element or the like. The digital camera is thus structured to carry out image-forming of an image of an object to be photographed, that is, of an photographic object, by the photographic lens unit 101 as the photographic optical system, and to read the formed image by the light-receiving element. The photographic optical system according to the present invention, described in the first to the fifth embodiment above for example, is utilized for the photographic lens unit 101.

An output from the light-receiving element is processed by a signal processor (not shown), which is controlled by a not-shown central processing unit (CPU), and is converted into digital image information. The image information digitized by the signal processor is subjected to a predetermined image processing in an image processor (not shown) which is also controlled by the central processing unit, and then stored in a semiconductor memory (not shown) such as a non-volatile memory. In this case, the semiconductor memory may be a memory card inserted in a memory card socket or the like, or may be a semiconductor memory integrated in a body of the camera. The liquid crystal monitor 106 may display an image while the photographing is being carried out as an electronic viewfinder, or may display an image stored in the semiconductor memory. The image stored in the semiconductor memory is possible to be transmitted to outside of the camera via an expansion card such as a communication card inserted in an expansion card socket or the like.

The photographic lens unit 101 is in a collapsed state and embedded within the camera body when the camera is being transported or carried by a user. When the user operates the main switch 107 to turn on the power, a lens barrel is extended and projected out from the camera body as shown in the drawing.

In many cases, the focusing, i.e. bringing the photographic object into focus, is achieved by half-pressing operation of the shutter release button 102. In this case, the focusing in the photographic optical system according to the present invention is achieved by moving the rear group GR, i.e. the fourth lens E4 to the sixth lens E6. When the shutter release button 102 is further pressed to a completely pressed state, the photographing is carried out, and subsequently the processing as described above is performed.

As already mentioned in the foregoing, it is possible to use the photographic optical system, for example, described in the first to the fifth embodiment of the invention, for the above-described camera or the mobile information terminal. Therefore, it is possible to accomplish the small-sized camera or the mobile information terminal having high image quality. Here, the camera or the mobile information terminal is also possible to photograph an image of high image quality, and to transmit that image outside via the expansion card or the like.

**Claims**

1. An optical system for use in photography, the system comprising:

   first to sixth lenses E1-E6 arranged in an order of the first lens (E1) to the sixth lens (E6) from an object side to a side of an image plane (FS),

   **characterised in that**:

   the first lens (E1) comprises a negative meniscus lens having its convex surface facing toward the object side;
   the second lens (E2) comprises a negative lens;
   the third lens (E3) comprising a positive lens;
   the fourth lens (E4) comprising a positive lens;
   the fifth lens (E5) comprising a negative lens; and
   the sixth lens (E6) comprising a positive lens,
   the first lens (E1), the second lends (E2) and th third lens (E3) form a front group (GF), the fourth lens (E4), the fifth lens (E5) and the sixth lens (E6) form a rear group (GR), and
   the rear group (GR) is moved to perform focusing corresponding toa change in an object distance.

2. An optical system according to claim 1, wherein the following condition is satisfied:

$$1.5 < fR/f < 3$$

   where fR is the focal length of the rear group (GR) and f is the focal length of the entire optical system

3. An optical system according to claim 1 or 2, wherein the following condition is satisfied:

$$1 < fr/f6 < 1.6$$

where fR is the focal length of the rear group (GR) and f6 is the focal length of the sixth lens (E6).

4. An optical system according to any one of claims 1 to 3, wherein a surface facing toward the side of the image plane (FS) of one of the first lens (E1) and the second lens (E2) is aspherical and the following condition is satisfied:

$$0.2 \ S/f, 1$$

where S is the distance in a direction of an optical axis of the optical system between a point where the aspherical surface and the optical axis intersect and a point
where the aspherical surface and a principal ray of light flux reaching a maximum image height intersect and f is the focal length of the entire optical system

5. An optical system according to any one of claims 1 to 4, wherein the fourth lens (E4) and the fifth lens (E5) are closely attached together to form a cemented lens.

6. An optical system according to any one of the preceding claims, wherein an aperture stop (FA) is disposed between the front group (GF) and the rear group (GR) and the rear group is moved as a fixed unit to perform the focusing corresponding to the change in the object distance.

7. An optical system according to claim 6, wherein the aperture stop (FA) is moved together with the rear group when the focusing corresponding to the change in the object distance is performed.

8. An optical system according to claim 6, wherein the aperture stop (FA) is configured not to be moved and is fixed integrally with the front group, when the focusing corresponding to the change in the object distance is performed.

9. A photographic lens unit, comprising an optical system according to any one of the preceding claims.

10. A camera comprising an optical system according to any one of claims 1 to 8 as an optical system for photographing.

11. A mobile information terminal, comprising an optical system according to any one of claims 1 to 8 as an optical system of a camera function portion.

# FIG. 1

# FIG. 2

F=2.4

ω=39°

ω=39°

-0.050 0 0.050
SPHERICAL
ABERRATION

-0.050 0 0.050
ASTIGMATISM

-0.050 0 0.050
DISTORTION
ABERRATION

# FIG. 3

F=2.4

$\omega=39°$

$\omega=39°$

-0.050 0 0.050

SPHERICAL
ABERRATION

-0.050 0 0.050

ASTIGMATISM

-0.050 0 0.050

DISTORTION
ABERRATION

# FIG. 4

F=2.4

$\omega=39°$

$\omega=39°$

-0.050 0 0.050

SPHERICAL
ABERRATION

-0.050 0 0.050

ASTIGMATISM

-0.050 0 0.050

DISTORTION
ABERRATION

# FIG. 5

# FIG. 6

SPHERICAL ABERRATION

F=1.9

-0.050   0   0.050

ASTIGMATISM

$\omega=39°$

-0.050   0   0.050

DISTORTION ABERRATION

$\omega=39°$

-0.050   0   0.050

# FIG. 7

F=1.9

ω=39°

ω=39°

-0.050 0 0.050

SPHERICAL
ABERRATION

-0.050 0 0.050

ASTIGMATISM

-0.050 0 0.050

DISTORTION
ABERRATION

# FIG. 8

F=1.9

ω=39°

ω=39°

-0.050 0 0.050

SPHERICAL
ABERRATION

-0.050 0 0.050

ASTIGMATISM

-0.050 0 0.050

DISTORTION
ABERRATION

# FIG. 9

# FIG. 10

| F=2.4 | ω=39° | ω=39° |
| --- | --- | --- |
| -0.050  0  0.050 | -0.050  0  0.050 | -0.050  0  0.050 |
| SPHERICAL ABERRATION | ASTIGMATISM | DISTORTION ABERRATION |

# FIG. 11

F=2.4

-0.050 0 0.050

SPHERICAL
ABERRATION

$\omega=39°$

-0.050 0 0.050

ASTIGMATISM

$\omega=39°$

-0.050 0 0.050

DISTORTION
ABERRATION

# FIG. 12

F=2.4

-0.050 0 0.050

SPHERICAL
ABERRATION

$\omega=39°$

-0.050 0 0.050

ASTIGMATISM

$\omega=39°$

-0.050 0 0.050

DISTORTION
ABERRATION

# FIG. 13

# FIG. 14

F=2.4

ω=39°

ω=39°

-0.050  0  0.050

-0.050  0  0.050

-0.050  0  0.050

SPHERICAL
ABERRATION

ASTIGMATISM

DISTORTION
ABERRATION

## FIG. 15

F=2.4

ω=39°

ω=39°

-0.050 0 0.050

-0.050 0 0.050

-0.050 0 0.050

SPHERICAL
ABERRATION

ASTIGMATISM

DISTORTION
ABERRATION

## FIG. 16

F=2.4

ω=39°

ω=39°

-0.050 0 0.050

-0.050 0 0.050

-0.050 0 0.050

SPHERICAL
ABERRATION

ASTIGMATISM

DISTORTION
ABERRATION

# FIG. 17

# FIG. 18

F=2.5          ω=39°          ω=39°

-0.050  0  0.050     -0.050  0  0.050     -0.050  0  0.050

SPHERICAL
ABERRATION

ASTIGMATISM

DISTORTION
ABERRATION

## FIG. 19

F=2.5

$\omega$=39°

$\omega$=39°

-0.050 0 0.050

SPHERICAL
ABERRATION

-0.050 0 0.050

ASTIGMATISM

-0.050 0 0.050

DISTORTION
ABERRATION

## FIG. 20

F=2.5

$\omega$=39°

$\omega$=39°

-0.050 0 0.050

SPHERICAL
ABERRATION

-0.050 0 0.050

ASTIGMATISM

-0.050 0 0.050

DISTORTION
ABERRATION

# FIG. 21

**European Patent Office**

**EUROPEAN SEARCH REPORT**

Application Number

EP 06 25 3101

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/008420 A1 (OHASHI KAZUYASU) 15 January 2004 (2004-01-15) * abstract * * paragraph [0002] * * figures 1,2 * | 1-11 | INV. G02B9/62 |
| A | US 2004/021958 A1 (MIZUGUCHI KEIKO) 5 February 2004 (2004-02-05) * abstract; figures 5,7 * | 1-11 | |
| A | US 4 256 373 A (HORIMOTO ET AL) 17 March 1981 (1981-03-17) * abstract; figure 1 * | 1-11 | |
| A | US 4 176 914 A (FUJIBAYASHI, KAZUO) 4 December 1979 (1979-12-04) * abstract; figure 1 * | 1-11 | |
| A | US 2001/038496 A1 (YAMAMOTO YASUSHI ET AL) 8 November 2001 (2001-11-08) * abstract; figures 6,7 * | 1-11 | TECHNICAL FIELDS SEARCHED (IPC) |
| A | US 6 404 564 B1 (YAMADA HIROSHI) 11 June 2002 (2002-06-11) * abstract * * column 3, line 25 - line 42 * * figure 1 * | 1-11 | G02B |
| A | US 2004/223074 A1 (TAKADA HIDEKI) 11 November 2004 (2004-11-11) * figure 48 * | 1-11 | |

The present search report has been drawn up for all claims

| Place of search | Date of completion of the search | Examiner |
|---|---|---|
| The Hague | 9 October 2006 | Seibert, Joachim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 06 25 3101

This annex lists the patent family members relating to the patent documents cited in the above-mentioned European search report.
The members are as contained in the European Patent Office EDP file on
The European Patent Office is in no way liable for these particulars which are merely given for the purpose of information.

09-10-2006

| Patent document cited in search report | | Publication date | Patent family member(s) | | Publication date |
|---|---|---|---|---|---|
| US 2004008420 | A1 | 15-01-2004 | JP | 2004013130 A | 15-01-2004 |
| US 2004021958 | A1 | 05-02-2004 | NONE | | |
| US 4256373 | A | 17-03-1981 | JP | 54032319 A | 09-03-1979 |
| US 4176914 | A | 04-12-1979 | DE | 7815397 U1 | 12-10-1978 |
| US 2001038496 | A1 | 08-11-2001 | JP | 3656089 B2 | 02-06-2005 |
| | | | JP | 2001343588 A | 14-12-2001 |
| US 6404564 | B1 | 11-06-2002 | JP | 2000275729 A | 06-10-2000 |
| US 2004223074 | A1 | 11-11-2004 | CN | 1530683 A | 22-09-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004177435 A

- JP 2004029641 A